# EUROPEAN PATENT APPLICATION

(11) **EP 4 841 786 A1**
(43) Date of publication of application: **18.11.2026**
(21) Application number: 26174466.8
(22) Date of filing: 24.04.2026
(51) Int. Cl.: H01M 50/403, H01M 10/0525, H01M 50/44, H01M 50/414, H01M 50/426, H01M 50/491

(54) **SEPARATORS FOR RECHARGEABLE LITHIUM BATTERIES, METHODS FOR MANUFACTURING THE SAME, AND RECHARGEABLE LITHIUM BATTERIES INCLUDING THE SAME**

(30) Priority: 16.05.2025 KR 20250064161
(71) Applicant: SAMSUNG SDI CO., LTD., Yongin-si, Gyeonggi-do 17084 (KR)
(72) Inventor: AHN, Hwichan, 17084 Yongin-si (KR); SEO, Dongwan, 17084 Yongin-si (KR); KIM, Gain, 17084 Yongin-si (KR); GU, Jayeon, 17084 Yongin-si (KR); PARK, Eunjin, 17084 Yongin-si (KR); KIM, Hanjun, 17084 Yongin-si (KR)
(74) Representative: Maiwald GmbH

(57) **Abstract**

Disclosed are a separator for a rechargeable lithium battery, a method of manufacturing the separator, and a rechargeable lithium battery including the separator. The separator includes nanofibers including a polyimide and a fluorine-based polymer and forming a plurality of pores. The fluorine-based polymer is included in an amount in a range of about 1 wt% to about 20 wt% based on 100 wt% of the separator. The separator has an air permeability in a range of about 50 s/100 cc to about 100 s/100 cc.

## Description

### BACKGROUND

### 1. Field

Separators for rechargeable lithium batteries and methods for manufacturing the separators, and rechargeable lithium batteries including the separators are disclosed.

### 2. Description of the Related Art

With increasing presence of electronic devices using batteries such as, e.g., mobile phones, notebook computers, and electric vehicles, demand for rechargeable batteries having high energy density and high capacity is increasing. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and electric energy is produced by oxidation and reduction reactions when lithium ions are intercalated/deintercalated at the positive and negative electrodes.

### SUMMARY

Some example embodiments include a separator for a rechargeable lithium battery exhibiting desired or improved air permeability and desired or improved heat resistance and mechanical strength.

Some example embodiments include a rechargeable lithium battery exhibiting desired or improved thermal stability and charge/discharge characteristics, including the separator.

Some example embodiments include a separator for a rechargeable lithium battery, which include nanofibers including a polyimide and a fluorine-based polymer and forming a plurality of pores. The fluorine-based polymer is included in an amount in a range of about 1 wt% to about 20 wt% based on 100 wt% of the separator, and the separator has an air permeability in a range of about 50 s/100 cc to about 100 s/100 cc.

Some example embodiments include a method for manufacturing a separator for a rechargeable lithium battery, which includes preparing an electrospinning solution including polyamic acid, a fluorine-based polymer, and a solvent, electrospinning the electrospinning solution onto a release film to form a coating layer, drying the coating layer at a temperature in a range of about 150 °C to about 250 °C, subjecting the dried coating layer to heat-pressing at a temperature in a range of about 200 °C to about 300 °C, subjecting the heat-pressed coating layer to thermal imidization at a temperature greater than about 300 °C and less than about 450 °C to form a separator; and removing the release film from the separator.

Some example embodiments include a rechargeable lithium battery including a positive electrode, a negative electrode, and a separator between the positive electrode and the negative electrode.

The separator for a rechargeable lithium battery according to some example embodiments can exhibit desired or improved air permeability and desired or improved heat resistance and mechanical strength, and a rechargeable lithium battery according to some example embodiments can exhibit desired or improved thermal stability and charge/discharge characteristics by including the separator.

### BRIEF DESCRIPTION OF THE DRAWINGS

FIG. 1 is a schematic perspective view showing a portion of a cylindrical rechargeable lithium battery cut away.
FIG. 2 is a cross-sectional view schematically illustrating a prismatic rechargeable lithium battery.
FIG. 3 and FIG. 4 are schematic exploded perspective views of a pouch-type rechargeable lithium battery.
FIG. 5 and FIG. 6 are drawings showing SEM images with different magnifications of the surface of the separator of Example 1.
FIG. 7 and FIG. 8 are drawings showing SEM images with different magnifications of the surface of the separator of Example 2.
FIG. 9 and FIG. 10 are drawings showing SEM images with different magnifications of the surface of the separator of Example 3.
FIG. 11 and FIG. 12 are drawings showing SEM images with different magnifications of the surface of the separator of Example 4.
FIG. 13 and FIG. 14 are drawings showing SEM images with different magnifications of the surface of the separator of Comparative Example 1.
FIG. 15 and FIG. 16 are drawings showing SEM images with different magnifications of the surface of the separator of Comparative Example 2.
FIG. 17 and FIG. 18 are drawings showing SEM images with different magnifications of the surface of the separator of Comparative Example 3.
FIG. 19 is a flowchart illustrating a method of manufacturing a separator for a rechargeable lithium battery, according to an example embodiment.

### DETAILED DESCRIPTION

Hereinafter, example embodiments are described in detail so that those of ordinary skill in the art can readily implement the example embodiments. However, this disclosure may be embodied in many different forms and is not construed as limited to the example embodiments set forth herein. The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like, of the constituents.

Herein, it should be understood that terms such as "comprises," "includes," or "have" are intended to designate the presence of an embodied feature, number, step, element, or a combination thereof, but does not preclude the possibility of the presence or addition of one or more other features, number, step, element, or a combination thereof.

In the drawings, the thickness of layers, films, panels, regions, and the like, may be exaggerated for clarity, and like reference numerals designate like elements throughout the specification. It is understood that when an element such as a layer, film, region, or substrate is referred to as being "on" another element, the element can be directly on the other element or intervening elements may also be present therebetween. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope (TEM) or a scanning electron microscope (SEM). Alternatively, it is possible to obtain an average particle diameter value by measuring a particle distribution using a dynamic light scattering method, performing data analysis, counting the number of particles for each particle size range, and calculating the number of particles. As used herein, when a definition is not otherwise provided, the average particle diameter (D₅₀) may mean the diameter (D₅₀) of particles having a cumulative volume of 50 vol% in the particle size distribution. Additionally, as used herein, when a definition is not otherwise provided, a particle size distribution may be obtained by a particle size analyzer using laser diffraction, and the diameter of particles having a cumulative volume of 50 vol% in the particle size distribution may be taken as the average particle diameter (D₅₀).

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Separator for Rechargeable Lithium Battery

According to some example embodiments, a separator for a rechargeable lithium battery includes a polyimide and a fluorine-based polymer, and includes nanofibers forming a plurality of pores, wherein the fluorine-based polymer is included in an amount in a range of 1 wt% to 20 wt% based on 100 wt% of the separator, and the separator has an air permeability in a range of about 50 s/100 cc to about 100 s/100 cc.

The polyimide (PI) has desired or improved heat resistance and chemical stability, so there is no risk, or little risk, of side reactions in the electrolyte solution, making the polyimide (PI) suitable as a material for separators for high-heat-resistant rechargeable lithium batteries.

The polyimide may be manufactured by thermal imidization reaction of polyamic acid, which is a precursor. In addition, the polyamic acid is soluble in solvents and its viscosity may be readily controlled, which may be advantageous for the electrospinning process.

The polyimide may be obtained by imidization of polyamic acid synthesized by a condensation reaction of dianhydride and diamine.

Examples of the dianhydride may include at least one of pyromellitic dianhydride (PMDA), 3,3',4,4'-biphenyltetracarboxylic acid dianhydride (BPDA), 4,4'-(hexafluoroisopropylidene)diphthalic acid dianhydride (6FDA), 3,3',4,4'-benzophenonetetracarboxylic acid dianhydride (BTDA), 1,4,5,8-naphthalenetetracarboxylic acid dianhydride (NTCDA), 1,2,4,5-cyclohexanetetracarboxylic acid dianhydride (HPMDA), oxydiphthalic dianhydride (ODPA), benzophenone tetracarboxylic acid dianhydride, biphenyltetracarboxylic dianhydride, or terphenyltetracarboxylic acid dianhydride (TPDA), but are not limited thereto.

Examples of the diamine may include at least one of aryl amine (wherein aryl may be C6 to C20 aryl) such as oxydianiline (ODA), methylenediphenyldiamine (MDA), meta-phenylenediamine (mPDA), para-phenylenediamine (pPDA), 2,2-bis[4-(4-aminophenoxy)phenyl]propane (BAPP), 1,3-bis(3-aminophenoxy)benzene (APB), 3,3'-diaminobenzidine (DAB), or 4,4'-diaminodiphenylsulfone (DDS), but are not limited thereto.

For example, the polyimide may be included in an amount in a range of about 80 wt% to about 99 wt%, for example, about 85 wt% to about 99 wt%, or about 85 wt% to about 95 wt% based on 100 wt% of the separator. Within the above range, a separator with desired or improved mechanical strength and heat resistance may be implemented.

For example, a weight average molecular weight (M_{w}) of the polyimide may be in a range of about 100,000 g/mol to about 300,000 g/mol, for example about 200,000 g/mol to about 250,000 g/mol. Within the above range, a separator with desired or improved electrospinning properties may be realized.

According to some example embodiments, the separator may be an electrospun separator manufactured by electrospinning an electrospinning solution prepared by mixing polyamic acid and a fluorine-based polymer.

The electrospinning process is a process of spraying a polymer solution into fine nanofibers using a high-voltage electric field. When manufacturing a separator for a rechargeable lithium battery through the electrospinning process, a separator having a uniform nanofiber network may be implemented, thereby securing a high porosity, and accordingly, ionic conductivity and air permeability are improved, and heat resistance and mechanical strength are superior to existing separators.

However, because the electrospun separator has a structure in which the nanofibers are stacked to form a separator, the pores in the separator are relatively large in size and number, and many pores are distributed in a linear structure, so there may be a challenge in that the separator has low air permeability.

According to some example embodiments, the separator may have substantially improved air permeability by including a fluorine-based polymer.

The fluorine-based polymer may be melted in a high temperature and high-pressure heat press process during the manufacture of a separator, and the melted fluorine-based polymer may reduce the size of the pores in the separator by reducing the linear pore structure in the separator. Accordingly, a separator for rechargeable lithium batteries satisfying desired or optimal air permeability may be implemented.

Additionally, by increasing the junction area between nanofibers, a separator with desired or improved mechanical strength may be realized.

For example, the fluorine-based polymer may include at least one of a polyvinylidene fluoride (PVdF) homopolymer, a polyvinyl fluoride (PVF) homopolymer, a copolymer of vinylidene fluoride or vinyl fluoride with other monomer, or a combination thereof.

Other monomer capable of copolymerizing with the vinylidene fluoride or vinyl fluoride to form a copolymer may be or include at least one of chlorotrifluoroethylene, trifluoroethylene, hexafluoropropylene, ethylene tetrafluoride, an alkylene (e.g., C1 to C10 alkylene) monomer, or a combination thereof.

For example, the copolymer may be or include a polyvinylidene fluoride-hexafluoropropylene (PVdF-HFP) copolymer including a unit derived from a vinylidene fluoride monomer and a unit derived from a hexafluoropropylene monomer.

For example, the melting point (Tₘ) of the fluorine-based polymer may be less than about 250 °C, for example, a range of about 100 °C to about 200 °C, about 100 °C to about 190 °C, about 150°C to about 190 °C, or about 160 °C to about 180 °C. When the above numerical range is satisfied, the fluorine-based polymer is sufficiently melted during the heat press process, effectively reducing the size of linear pores in the electrospun separator and increasing the junction area between nanofibers, thereby enabling the implementation of a separator with desired or improved air permeability and strength.

For example, the fluorine-based polymer may be included in an amount in a range of about 1 wt% to about 20 wt%, for example, about 5 wt% to about 20 wt% based on 100 wt% of the separator. If (when) the amount of the fluorine-based polymer is less than about 1 wt%, it may be challenging to sufficiently reduce the size of the pores in the separator, so the pore size becomes excessively or substantially large, and the air permeability value becomes smaller than the appropriate or desired value, increasing the risk of a battery short circuit.

If (when) the amount of the above fluorine-based polymer is greater than about 20 wt%, the tensile strength of the separator may decrease, and as the fluorine-based polymer is excessively or substantially included, the pore size within the separator may become excessively or substantially small and the pores may be unevenly distributed, causing the air permeability value of the separator to become excessively or substantially large and the uniformity of the air permeability may decrease.

For example, the amount of the fluorine-based polymer included in the separator may be measured using an inductively coupled plasma spectroscopy (ICP-OES, Inductively Coupled Plasma-Optical Emission Spectroscopy) or SEM-EDS (Scanning Electron Microscopy-Energy Dispersive Spectroscopy), or may be predicted from the amount of polymer added in the electrospinning solution.

For example, in the separator, the polyimide and the fluorine-based polymer may be included in a weight ratio in a range of about 99:1 to about 80:20, for example, may be included in a weight ratio of about 95:5 to about 80:20. If (when) the above weight ratio is satisfied, a separator having both desired or improved heat resistance and air permeability can be realized.

For example, the separator may further include a heat-resistant polymer, and the heat-resistant polymer may include a polymer of at least one of polypropylene (PP), polyester, polyamide, polyetherimide (PEI), polyetheretherketone (PEEK), polyphenyl terephthalamide (PTA), polysulfone (PSF), polyethersulfone (PES), polyphenylene sulfide (PPS), polyamideimide (PAI), polyetherimide (PEI), polyacrylonitrile (PAN), polycarbonate (PC), polyvinyl chloride (PVC), polyvinylidene chloride, a polyethylene glycol derivative, polyoxide, polyvinylacetate, polystyrene (PS), polyvinylpyrrolidone (PVP), a copolymer thereof, or a combination thereof. The heat-resistant polymer is a non-aqueous polymer, and if (when) an aqueous polymer is used, it may be difficult to form fibers by electrospinning, and thus an aqueous polymer may not be suitable.

For example, the separator includes nanofibers forming a plurality of pores.

Within the framework of the present invention, the term "nanofiber" relates to any fiber having an average diameter within the range of 1 nm to 1000 nm.

For example, an average diameter (nm) of the nanofibers may be in a range of about 50 nm to about 200 nm, for example, about 80 nm to about 200 nm, about 80 nm to about 180 nm, or about 80 nm to about 170 nm.

For example, the average diameter of the pores may be in a range of about 50 nm to about 2,500 nm, for example, about 100 nm to about 2,000 nm, about 100 nm to about 1,500 nm, about 100 nm to about 1,000 nm, or about 100 nm to about 500 nm. If (when) the average diameter of the nanofibers and the average diameter of the pores satisfy the above numerical ranges, a separator with desired or improved air permeability and heat resistance may be realized.

The diameter of the nanofiber may refer to the widest diameter among the diameters of the fiber measured based on the cross-section of the individual nanofiber, and may be measured in a direction perpendicular to the longitudinal direction of the nanofiber.

The average diameter of the nanofibers may be calculated by randomly measuring the cross-sectional diameters of 20 fibers in a scanning electron microscope (SEM) image of the separator surface, and then calculating the arithmetic average of the diameters of the fibers.

The pore diameter refers to a diameter of an individual pore included in the nanofibers having a three-dimensional network structure, and the longest axis crossing the cross-section of the pore may be defined as the diameter. The average diameter of the pores may mean a value obtained by measuring the cross-sectional diameters of 20 pores in an SEM image of the surface of the separator and calculating the arithmetic average of the cross-sectional diameters.

For example, a value (nm/wt%) obtained by dividing the average diameter (nm) of the nanofibers by the amount (wt%) of the fluorine-based polymer based on 100 wt% of the separator may be in a range of about 8 to about 20, for example, about 8.5 to about 20, or about 8.5 to about 18.

As the amount of the fluorine-based polymer increases, the diameter of the nanofibers of the separator increases, but if (when) the amount increases excessively or substantially, the properties of the separator may deteriorate. In addition, if (when) the amount of fluorine-based polymer is too low, the diameter of the nanofibers may be large compared to the amount of fluorine-based polymer, which may deteriorate the air permeability characteristics of the separator.

Therefore, when the average diameter of the nanofibers relative to the amount of the fluorine-based polymer included in the separator satisfies the above numerical range, a ratio of the average diameter of the nanofibers relative to the amount of the fluorine-based polymer is controlled as desired, thereby realizing a separator having desired or improved air permeability and heat resistance.

For example, a thickness of the separator may be in a range of about 1 µm to about 15 µm, for example about 5 µm to about 15 µm, about 1 µm to about 10 µm, about 5 µm to about 10 µm, about 7 µm to about 10 µm, or about 7 µm to about 8.5 µm. If (when) the numerical range is satisfied, an ultra-thin separator maybe designed, while also implementing a separator with desired or improved durability, air permeability, and heat resistance.

In the present invention, the thickness of the separator may be measured, for example, using a micrometer or via an image captured by an optical microscope, such as a scanning electron microscope (SEM). For instance, the thickness of the separator may be measured by observing the cross-section of a lithium secondary battery or the separator using a scanning electron microscope (SEM). In this process, an SEM image may be obtained at a magnification of 1,000x to 10,000x from a region representative of the overall cross-sectional thickness of the separator. The starting point and the ending point for measuring the thickness may be set based on the outermost boundaries of the separator. As an example, a first virtual tangent line may be drawn passing through the apex of the most protruding nanofiber on one surface of the separator, and a direction perpendicular to the first virtual tangent line may be defined as the thickness measurement direction. The starting point may be defined as the outermost protrusion of the nanofiber located on the first virtual tangent line, and the ending point may be defined as the outermost protrusion on a second virtual tangent line that is parallel to the first virtual tangent line and contacts the other surface opposite to the one surface. The shortest distance between the starting point and the ending point set in this manner may be determined as the thickness of the separator. The measurement may be repeated at 10 or more different points, and the arithmetic mean of the obtained values may be determined as the final thickness.

Alternatively, the thickness of the separator may be measured using a micrometer; in this case, the thickness of the separator itself may be measured using a Digimatic Micrometer (MDH-25MC, Mitutoyo Corp.). The measurement may be repeated at 10 or more different points, and the arithmetic mean of the obtained values may be determined as the final thickness.

The air permeability of a separator may refer to the time (in seconds) it takes for 100cc of flow (air) to pass through the separator. The lower the air permeability, the larger the pore size of the separator, and the shorter the time it takes for the flow to pass through the separator.

For example, the air permeability (s/100cc) of the separator may be in a range of about 50 s/100cc to about 100 s/100cc, for example, about 50 s/100cc to about 90 s/100cc, or about 53 s/100cc to about 88 s/100cc. As described above, in the case of a separator that includes a fluorine-based polymer as desired, the pore sizes are distributed within an appropriate or desired range, thereby satisfying desired or optimal air permeability, and a rechargeable lithium battery containing such a separator has desired or improved charge/discharge characteristics and the risk of short circuit occurrence may be significantly reduced.

For example, a standard deviation of the air permeability (s/100cc) of the separator may be in a range of about 2.0 s/100cc to about 5.0 s/100cc, for example about 2.4 s/100cc to about 5.0 s/100cc, about 2.4 s/100cc to about 4.0 s/100cc, or about 2.45 s/100cc to about 3.95 s/100cc. If (when) the standard deviation of the air permeability satisfies the above numerical range, it means that the arrangement and composition of the nanofibers are uniform, and thus a separator with desired or improved air permeability may be implemented.

For example, the air permeability of the separator may be obtained by measuring the time (in seconds) it takes for 100 cc of air to permeate using an air permeability measuring device (e.g., Asahi Seiko Co., Ltd., EG01-55-1MR). For example, three areas may be randomly selected for the separator, the air permeability may be measured, and then the standard deviation may be obtained for the three values.

For example, the tensile strength in the MD direction (machine direction) of the separator may be in a range of about 1000 kgf/cm² to about 2000 kgf/cm², for example, about 1000 kgf/cm² to about 1500 kgf/cm².

For example, the elongation of the separator in the MD direction may be in a range of about 5% to about 15%, for example about 5% to about 10%, or about 5% to about 9%.

For example, the tensile strength and elongation of the separator can be measured using a universal testing machine (UTM) according to the ASTM D882 standard. For example, the tensile strength may be calculated by applying a tensile load to the separator at a tensile rate of about 100 mm/min, measuring the maximum load until the separator is destroyed, and dividing this maximum load value by the initial cross-sectional area of the sample. For example, the elongation may be measured by stretching the separator at a rate of about 500 mm/min and calculating the rate at which the separator stretches when it breaks.

For example, a density of the separator may be in a range of about 0.8 g/cm³ to about 0.85 g/cm³, for example, about 0.8 g/cm³ to about 0.82 g/cm³.

### Method for Manufacturing Separator for Rechargeable Lithium Battery

A method for manufacturing a separator for a rechargeable lithium battery according to some example embodiments includes (1) preparing an electrospinning solution including polyamic acid, a fluorine-based polymer, and a solvent; (2) electrospinning the electrospinning solution onto a release film to form a coating layer; (3) drying the coating layer at a temperature in a range of about 150 °C to about 250 °C; (4) subjecting the dried coating layer to heat-pressing at a temperature in a range of about 200 °C to about 300 °C; (5) subjecting the heat-pressed coating layer to thermal imidization at a temperature greater than about 300 °C and less than about 450 °C to form a separator; and (6) removing the release film from the separator.

According to the manufacturing method, a separator for a rechargeable lithium battery having desired or improved heat resistance and air permeability may be manufactured by a simple process of adding a fluorine-based polymer to an electrospinning solution and heat-pressing.

The electrospinning solution may be prepared by mixing polyamic acid, the fluorine-based polymer, and a solvent, and optionally may be prepared by further including a heat-resistant polymer as described above.

For example, the solvent may include at least one of dimethyl acetamide, tert-butyl acetate, dimethyl formamide, dimethyl sulfoxide, acetone, or a combination thereof.

For example, based on a sum of 100 wt% of the amount of the polyamic acid and the amount of the fluorinated polymer, the fluorinated polymer may be included in an amount in a range of about 1 wt% to about 20 wt%. If (when) the amount of the fluorinated polymer is less than about 1 wt%, it may be difficult to sufficiently reduce the size of the pores within the separator, and if (when) the amount of the fluorinated polymer exceeds about 20 wt%, the tensile strength of the separator may decrease, and because the fluorinated polymer is excessively or substantially included, it may be difficult to distribute the fluorinated polymer uniformly within the separator, which may reduce the uniformity of the air permeability.

For example, based on a sum of 100 wt% of the amount of the polyamic acid and the amount of the fluorinated polymer, the polyamic acid may be included in an amount in a range of about 80 wt% to about 99 wt%, for example, about 85 wt% to about 99 wt%, or about 85 wt% to about 95 wt%. When the above range is satisfied, a separator with desired or improved mechanical strength and heat resistance may be manufactured.

For example, the amount of polyimide and fluorine-based polymer included in the aforementioned separator may be predicted from the amount of polymer (polyamic acid and fluorine-based polymer) added to the electrospinning solution. For example, after the electrospinning solution is electrospun to form a coating layer, the solvent in the electrospinning solution is evaporated through a post-process, and the polyamic acid is all imidized into polyimide through a thermal imidization process, so that the amount of polymer added in the electrospinning solution may be the same as the amount of the polymer in the final separator.

For example, in the electrospinning solution, the polyamic acid and the fluorinated polymer may be included in a weight ratio in a range of about 99:1 to about 80:20, for example, about 95:5 to about 80:20. When the above weight ratio is satisfied, a separator having both desired or improved heat resistance and air permeability may be realized.

Next, the electrospinning of the electrospinning solution onto a release film to form a coating layer may be performed.

For example, the releasing film may be used as a support layer for forming an electrospun coating layer and may perform a collecting function. For example, the releasing film may be made of or include at least one of aluminum foil, copper foil, SUS, or a combination thereof.

The electrospinning process may be performed using a single-nozzle electrospinning device, and by applying a voltage of a constant magnitude between a tip and a collector roller using one nozzle, an electrospinning film may be formed on the collector roller.

For example, the electrospinning process may be performed by positioning a nozzle consisting of one tip having an aperture size in a range of about 19G (gauge) to about 25G at a distance in a range of about 10 cm to about 20 cm from a collector roller, adding the electrospinning solution to the tip, and applying a voltage in a range of about 18 kV to about 23 kV.

At this time, the roll speed of the collector roller may be in a range of about 50 rotations per minute (rpm) to about 300 rpm, and the solid content in the electrospinning solution discharged from the tip may be in a range of about 1 µL/min (0.6 mL/h) to about 5 µL/min (3 mL/h).

If (when) the hole size of the tip is in a range of about 19G to about 25G, the hole size of the tip is suitable because a coating layer of a desired shape may be formed.

According to the electrospinning process, a polymer solution is spun and stretched into a fiber shape, and then spun onto a target substrate in the form of nanofibers, thereby forming a coating layer.

To explain this in more detail, the electrospinning solution is suspended in the form of a droplet due to surface tension at the tip end, and when voltage is applied, charges are accumulated on the surface of the electrospinning solution droplet, and a repulsive force between the charges occurs. Accordingly, the repulsion force between charges is directed in the opposite direction to the surface tension of the solution, and when a critical voltage is reached, a conical Taylor cone is formed, and a polymer jet is emitted from the tip of the Taylor cone, and through multi-axial stretching in the whipping region, nanofibers are collected in the form of a non-woven fabric on a collector roller to form a coating layer.

At this time, the electrospinning process may be performed under conditions of a temperature in a range of about 20 °C to about 30 °C and a relative humidity in a range of about 0% to about 60%. If (when) the electrospinning process is performed under the above temperature and relative humidity conditions, there may be an advantage in spinning while maintaining the thickness of the fiber constant.

Additionally, the roll speed of the collector roller may be adjusted so that the coating layer may be formed to an appropriate or desired thickness, and may be, for example, a speed in a range of about 50 meters per minute (mpm) to about 300 mpm.

In addition, the tip air is adjusted as desired to reduce or minimize interference between the tips and to enable uniform electrospinning. The tip air adjustment may be performed by flowing compressed air at a pressure in a range of about 0.01 MPa to about 0.5 MPa.

For example, the electrospinning process may be performed two or more times.

As nanofibers are formed by electrospinning, the formed nanofibers may have a three-dimensional network structure. Because the coating layer is formed by an electrospinning process, the solvent may be readily volatilized, and thus the springback phenomenon that causes damage to the electrode may be better reduced or suppressed, which is suitable.

Next, the drying of the coating layer at a temperature in a range of about 150 °C to about 250 °C may be performed. In the above drying step, residual solvent within the electrospun coating layer may be removed, thereby stabilizing the nanofiber structure.

For example, the drying temperature may be in a range of about 150 °C to about 220 °C, for example, about 180 °C to about 220 °C, or about 190 °C to about 210 °C. When the above numerical range is satisfied, a separator with desired or improved breathability and heat resistance may be realized.

If (when) the drying temperature is less than about 150 °C, the solvent in the electrospinning solution may not completely volatilize and may remain, causing chemical side effects such as re-dissolving the formed nanofibers, thereby lowering the properties of the separator. Additionally, the remaining solvent may react with the electrolyte solution inside the rechargeable lithium battery, thereby deteriorating the electrochemical characteristics of the battery.

For example, the drying may be performed in a vacuum.

For example, the drying may be performed for a duration in a range of about 30 minutes to about 1 hour.

Next, the dried coating layer may be subjected to heat-pressing at a temperature in a range of about 200°C to about 300°C.

Under the high temperature and high pressure conditions of the heat-pressing, the fluorine-based polymer may be melted, and the melted fluorine-based polymer may reduce the linear pore structure within the separator, thereby controlling the size of the pores within the separator to an appropriate or desired range, thereby manufacturing a separator with desired or improved air permeability. In addition, the mechanical strength of the separator may be improved by increasing the bonding force between nanofibers through the heat-pressing.

For example, the heat-pressing may be performed at a temperature in a range of about 200 °C to about 300 °C, for example, at a temperature of about 220 °C to about 280 °C, or at a temperature of about 240 °C to about 260 °C. If (when) the above numerical range is satisfied, a separator having desired or improved mechanical strength such as tensile strength and elongation and desired or improved air permeability may be manufactured. However, if (when) the process is performed at a temperature of less than about 200 °C, the air permeability of the separator may be low, and both the tensile strength and elongation may be insufficient.

For example, the heat-pressing may be performed by a Hot Press Machine (TB234, Techland, Inc.) device.

At this time, the heat-pressing pressure may be in a range of about 3.0 kgf/cm² to about 5.0 kgf/cm², for example, about 4.0 kgf/cm² to about 5.0 kgf/cm², about 4.0 kgf/cm² to about 4.8 kgf/cm², or about 4.2 kgf/cm² to about 4.5 kgf/cm². If (when) the above numerical range is satisfied, a separator having desired or improved mechanical strength such as tensile strength and elongation and desired or improved air permeability may be manufactured. If (when) the value is less than about 3.0 kgf/cm², the air permeability of the separator may be low, and both the tensile strength and elongation may be insufficient.

Next, the heat-pressed coating layer is subjected to thermal imidization at a temperature of greater than about 300 °C and less than about 450 °C to form a separator. Through this process, the polyamic acid included in the coating layer may be thermally imidized to produce polyimide.

For example, the thermal imidization temperature may be in a range of about 350 °C to about 450 °C, for example about 380 °C to about 420 °C. If (when) the above numerical range is satisfied, a separator having desired or improved mechanical strength, heat resistance, and air permeability may be manufactured without deforming the separator. However, (when) the thermal imidization temperature is less than or equal to about 300 °C, the tensile strength and elongation of the separator may be significantly reduced.

After forming the separator, further roll pressing may be performed. The roll pressing process may be performed at a temperature in a range of about 25 °C to about 110 °C. If (when) the roll pressing process is further performed, the separator may be compressed to shorten the Li ion movement path, which may have the advantage of being advantageous for lithium ion movement during charging and discharging.

Next, the releasing film may be removed (peeled off) from the manufactured separator to manufacture a separator for a rechargeable lithium battery in the form of a self-standing film.

### Rechargeable Lithium Battery

Some example embodiments include a rechargeable lithium battery including a positive electrode, a negative electrode, and the separator between the positive electrode and the negative electrode.

Because the rechargeable lithium battery includes an electrode including the aforementioned separator, the separator has desired or improved thermal stability and desired or improved charge/discharge characteristics.

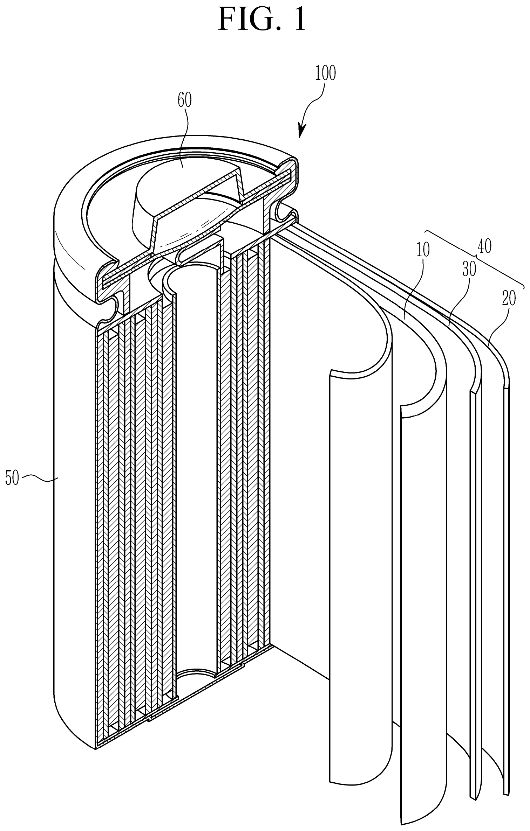

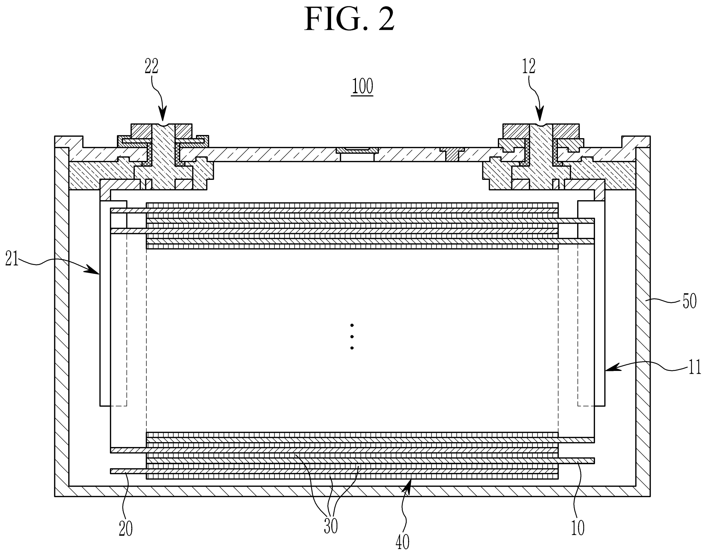

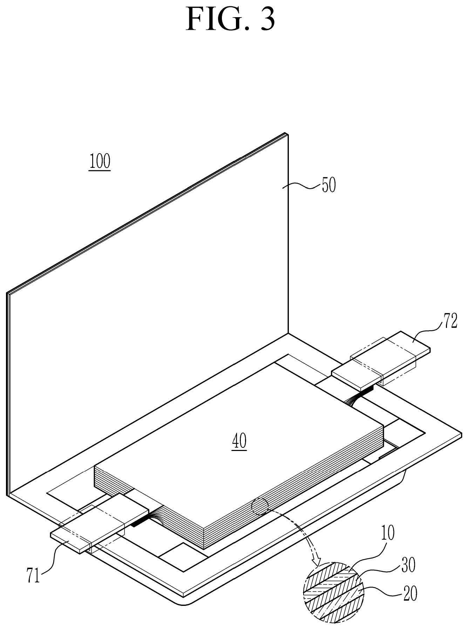

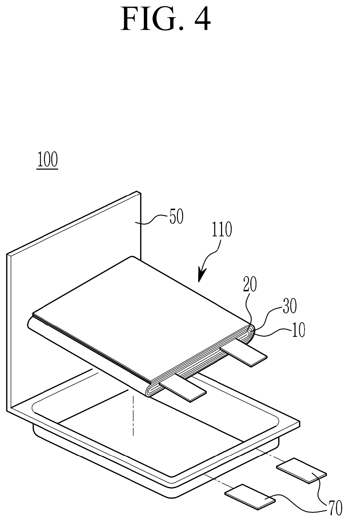

The rechargeable lithium battery may be classified into cylindrical, prismatic, pouch, coin, and the like depending on their shape. For example, FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIG. 3 and FIG. 4 are schematic exploded perspective views of pouch-type rechargeable lithium batteries. Referring to FIG. 1 to FIG. 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals a case 50 as shown in FIG. 1.

In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 may include an electrode tab 70 that constitutes an electric path for conducting current formed in an electrode assembly 40 to the outside of the battery 100. For example, the electrode tab 70 may be disposed in the same direction, as illustrated in FIG. 4, or the positive electrode tab 71 and the negative electrode tab 72 may be disposed in opposite directions, as illustrated in FIG. 3.

The rechargeable lithium battery according to some example embodiments may be applied to various types of electric devices such as, e.g., automobiles, motorcycles, electric bicycles, drones, ships, trains, aircraft, portable electronic devices, mobile phones, electric tools, and/or power sources for power storage, and the present disclosure is not limited thereto.

Hereinafter, the remaining components of a rechargeable lithium battery, excluding the separator, are described in detail.

### Positive Electrode

The positive electrode for a rechargeable lithium battery may include a current collector, and a positive electrode active material layer formed on the current collector. The above positive electrode active material layer includes a positive electrode active material, may further include a binder and/or a conductive material, and may further include a sacrificial positive electrode material.

As the positive electrode active material, a compound (lithiated intercalation compound) capable of intercalating and deintercalating lithium may be used. For example, the positive electrode active material may be or include at least one of a composite oxide of lithium and a metal such as or including at least one of cobalt, manganese, nickel, and a combination thereof.

The positive electrode active material may include a lithium transition metal composite oxide, and the lithium transition metal composite oxide may include, for example, at least one of a lithium nickel composite oxide, a lithium cobalt composite oxide, a lithium nickel-cobalt composite oxide, a lithium nickel-cobalt composite oxide, a lithium nickel-cobalt-aluminum composite oxide, a lithium nickel-cobalt-manganese composite oxide, a lithium nickel-manganese composite oxide, a lithium iron phosphate compound, a lithium manganese iron phosphate compound, or a combination thereof.

As an example, a compound represented by any one of the following chemical formulas may be used. LiₐA_{1-b}X_{b}O_{2-c}O_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare-earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al or a combination thereof.

For example, the positive electrode active material may include a lithium nickel-based composite oxide, and may be or include a high nickel-based positive electrode active material in which the nickel content is in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium nickel-based composite oxide. The high-nickel positive electrode active materials may achieve high capacity, and may be applied to high-capacity, high-density rechargeable lithium batteries.

An amount of the positive electrode active material may be in a range of about 90 wt% to about 99.5 wt% based on a total weight of the positive electrode active material layer and amounts of each of the binder and the conductive material may be in a range of about 0.5 wt% to about 5 wt%, respectively, based on a total weight of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause adverse chemical change in the battery and that conducts electrons can be used in the battery. Examples of the conductive material may include a carbon-based material such as at least one of natural graphite, artificial graphite, carbon black, acetylene black, Ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

The current collector may include at least one of Al, SUS, or a combination thereof, but is not limited thereto.

### Negative Electrode

The negative electrode for a rechargeable lithium battery may include a current collector, and a negative electrode active material layer on the current collector. The negative electrode active material layer may include a negative electrode active material, and may further include a binder and/or a conductive material.

The negative electrode active material may include at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ion may be for example a carbon-based negative electrode active material, and the carbon-based negative electrode active material may include for example crystalline carbon, amorphous carbon, or a combination thereof. The crystalline carbon may be graphite such as non-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Ni, Fe, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles and amorphous carbon on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material, based on the total weight of the negative electrode active material layer.

The binder attaches the negative electrode active material particles to each other, and attaches the negative electrode active material to the current collector. The binder may be or include at least one of a water-insoluble binder, a water-soluble binder, or a combination thereof.

The water-insoluble binder may include at least one of polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof.

The water-soluble binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When a water-soluble binder is used as the above-mentioned negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed together. The alkali metal may be or include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material may impart conductivity to the electrode, and may include, for example, a carbon-based material such as or including at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Electrolyte Solution

An electrolyte solution for a rechargeable lithium battery may include a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, tert-butyl acetate, methyl propionate, ethyl propionate, decanolide, v-butyrolactone, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types of solvents.

If (when) using a carbonate-based solvent, a cyclic carbonate and a chain carbonate may be mixed together, and the cyclic carbonate and the chain carbonate may be mixed in a volume ratio in a range of about 1:1 to about 1:9.

The electrolyte solution may further include an additive of at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof.

The lithium salt dissolved in the organic solvent supplies lithium ions in a battery, enables a basic operation of a rechargeable lithium battery, and improves transportation of the lithium ions between positive and negative electrodes. The lithium salt may include one or more of, for example, LiPF₆, LiBF₄, LiSbF₆, LiAsF₆, LiClO₄, LiAlO₂, LiAlCl₄, LiPO₂F₂, LiCl, LiBr, Lil, LiNO₃, LiSO₄, lithium acetate, lithium bis(fluorosulfonyl)imide (LiFSI), lithium bis(trifluoromethanesulfonyl)imide (LiTFSI), LiC₄F₉SO₃, LiN(CₓF₂ₓ₊₁SO₂)(C_{y}F_{2y+1}SO₂) (x and y are integers ranging from 1 to 20), lithium trifluoromethanesulfonate (LiOTf), lithium tetrafluoroethanesulfonate, lithium difluoro(bisoxalato)phosphate (LiDFBOP), lithium bis(oxalato)borate (LiBOB), and lithium difluoro(oxalato)borate (LiDFOB).

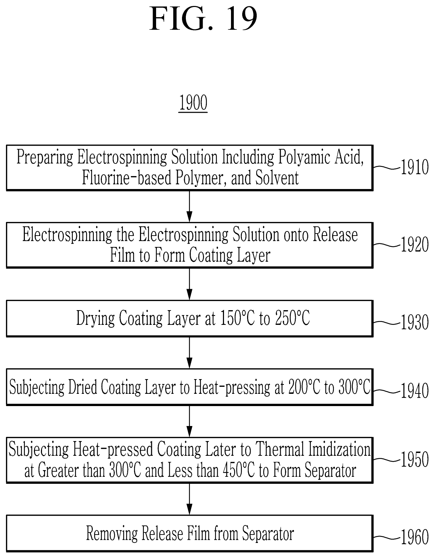

FIG. 19 is a flowchart illustrating a method of manufacturing a separator for a rechargeable lithium battery, according to an example embodiment. In Fig. 19, the method 1900 includes operation 1910, which includes preparing an electrospinning solution including polyamic acid, a fluorine-based polymer, and a solvent. For example, based on a sum of 100 wt% of the amount of the polyamic acid and the amount of the fluorinated polymer, the fluorine-based polymer is included in an amount in a range of about 1 wt% to about 20 wt%. In another example, the polyamic acid and the fluorinated polymer is included in a weight ratio in a range of about 99:1 to about 80:20. Operation 1920 includes electrospinning the electrospinning solution onto a release film to form a coating layer.

Operation 1930 includes drying the coating layer at a temperature in a range of about 150 °C to about 250 °C. For example, the drying is performed in a vacuum for a duration in a range of about 30 minutes to about 1 hour. In the present application, the term vacuum means a pressure of 10 mbar or less.

Operation 1940 includes subjecting the dried coating layer to heat-pressing at a temperature in a range of about 200 °C to about 300 °C. For example, the heat-pressing is performed at a temperature in a range of about 220 °C to about 280 °C. In another example, the heat-pressing is performed at a pressure in a range of about 3.0 kgf/cm² to about 5.0 kgf/cm². Operation 1950 includes subjecting the heat-pressed coating layer to thermal imidization at a temperature greater than about 300 °C and less than about 450 °C to form a separator. For example, the thermal imidization is performed at a temperature in a range of about 350 °C to about 450 °C. Operation 1960 includes removing the release film from the separator.

Hereinafter, examples of the present disclosure and comparative examples are described. These examples, however, are not in any sense to be interpreted as limiting the scope of the disclosure.

### Examples:

### Example 1

Polyamic acid was dissolved in a dimethyl acetamide solvent, and polyvinylidene fluoride (PVdF) was added thereto to prepare an electrospinning solution. The electrospinning solution included 5 wt% of the PVdF based on 100 wt% of a total amount of the polyamic acid and the PVdF.

Subsequently, the electrospinning solution was electrospun on a releasing film to form a coating layer. The electrospinning was performed under the following conditions.

Herein, the electrospinning was performed at 26 °C under relative humidity of 50% by using a single nozzle electrospinning device, wherein a nozzle consisting of 1 tip with a hole size of 19 G was positioned from a collector roller at a distance of 15 cm to 18 cm, adding the electrospinning solution to the tip, and applying a voltage of 18 kV to 23 kV between the nozzle tip and the collector roller.

Herein, the collector roller was set at a roll speed of 50 rpm to 300 rpm, and the electrospinning solution was adjusted to be discharged at a solid content of 1 µl/min to 5 µl/min from the tip. In addition, the electrospinning was performed by inflowing compressed air at a pressure of 0.1 MPa.

Subsequently, the electrospun coating layer was dried at 200 °C.

The dried coating layer was heat-pressed at 250 °C with a heat press (a heat press device: Hot Press Machine (TB234, Techland, Inc.)) at a pressure of 4.4 kgf/cm² (a weight of 440 kg).

The heat-pressed coating layer was imidized at 400 °C to form a separator, from which the releasing film was removed, obtaining the separator of Example 1 (a thickness = 8.1 µm).

Based on 100 wt% of the final separator, the polyimide (PI) was included in an amount of 95 wt%, and the PVdF was included in an amount of 5 wt%.

### Examples 2 to 4 and Comparative Examples 1 to 3

A separator was manufactured substantially in the same manner as in Example 1 except that the electrospinning solution was prepared by adjusting the mixing amounts of polyamic acid and PVdF as shown in Table 1 below.

### Example 5 and Comparative Examples 4 to 8

A separator was manufactured substantially in the same manner as in Example 1 except that the temperature and the pressure (weight) in the heat pressing step and the thermal imidization temperature were changed as shown in Table 1 below.

**Table 1:**

| | Electrospinning solution | | Heat-pressing | | Imidization |
|---|---|---|---|---|---|
| | Amount of polyamic acid (wt%) | Amount of PVdF (wt%) | Tempe rature (°C) | Pressure (kgf/cm²) | Tempe rature (°C) |
| Example 1 | 95 | 5 | 250 °C | 4.4 kgf/cm² | 400 °C |
| Example 2 | 90 | 10 | | | |
| Example 3 | 85 | 15 | | | |
| Example 4 | 80 | 20 | | | |
| Comparative Example 1 | 100 | 0 | | | |
| Comparative Example 2 | 75 | 25 | | | |
| Comparative Example 3 | 70 | 30 | | | |
| Comparative Example 4 | 95 | 5 | 250 °C | 4.4 kgf/cm² | 200 °C |
| Comparative Example 5 | | | | | 300 °C |
| Example 5 | | | 250 °C | 2.0 gf/cm² | 400 °C |
| Comparative Example 6 | | | 200 °C | 4.4 kgf/cm² | |
| Comparative Example 7 | | | 150 °C | | |
| Comparative Example 8 | | | 100 °C | | |

### Evaluation Example 1: Evaluation of Properties and SEM Images of Separators according to PVdF Amount

The separators of Examples 1 to 4 and Comparative Examples 1 to 3 were respectively measured with respect to an amount (wt%) of PVdF based on 100 wt% of each separator and shown as 'A' in Table 2 below. The amount of PVdF was predicted from an input amount of PVdF in each electrospinning solution.

In addition, the SEM surface image of each of the separators was used to take 20 random nanofibers and measure their cross-section diameters, which were used to calculate an arithmetic average, and the obtained average diameter of the nanofibers is shown as 'B' in Table 2 below.

Subsequently, the average diameter of the nanofibers was divided by the PVdF content based on 100 wt% of the separator to obtain a ratio B/A, which was shown as 'C' in Table 2 below.

In addition, the separators were measured with respect to thickness and density, which are shown in Table 2 below.

In addition, the separators were respectively measured with respect to air permeability by using an air permeability measuring apparatus (EG01-55-1MR), wherein the air permeability was three times or more measured to calculate a standard deviation thereof, which is shown in Table 2 below.

In addition, the separators were respectively measured with respect to tensile strength and elongation according to ASTM D882 by using a universal testing machine (UTM), and the results are shown in Table 2 below.

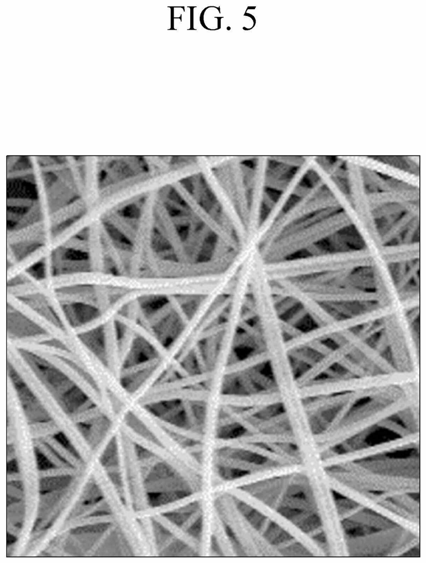

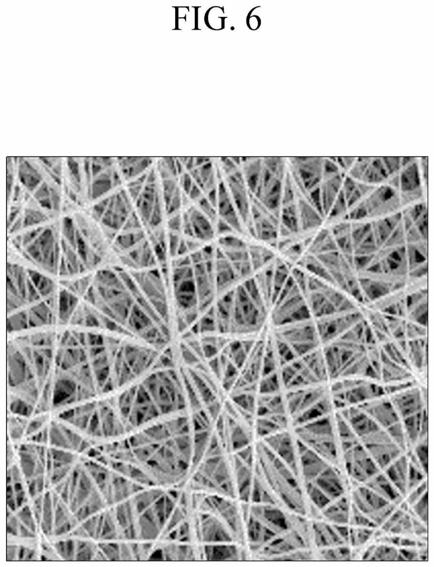

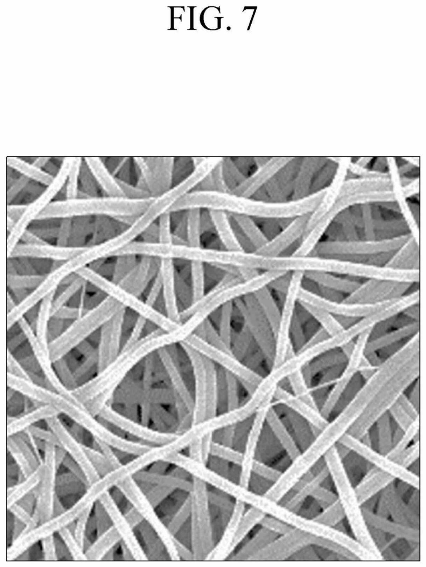

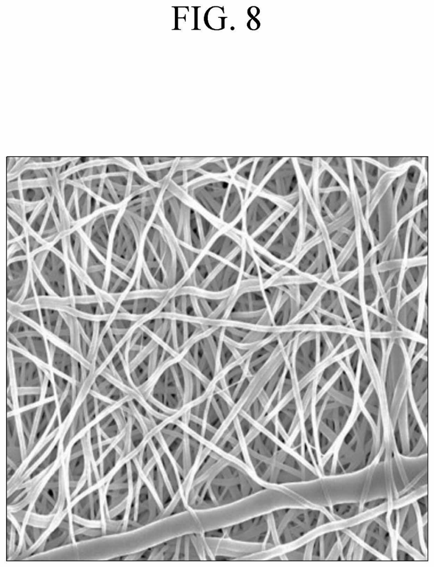

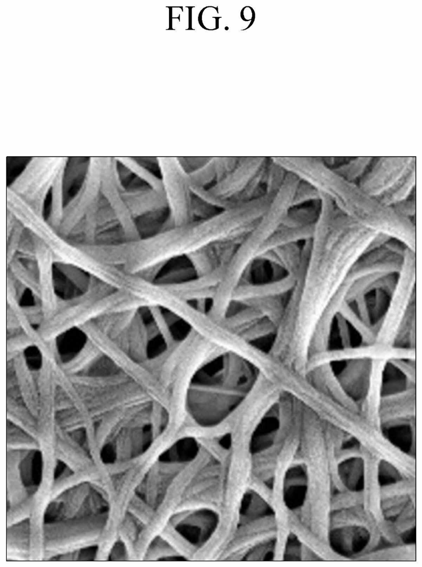

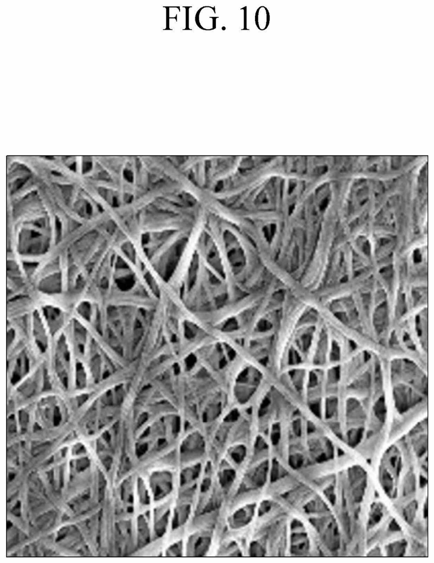

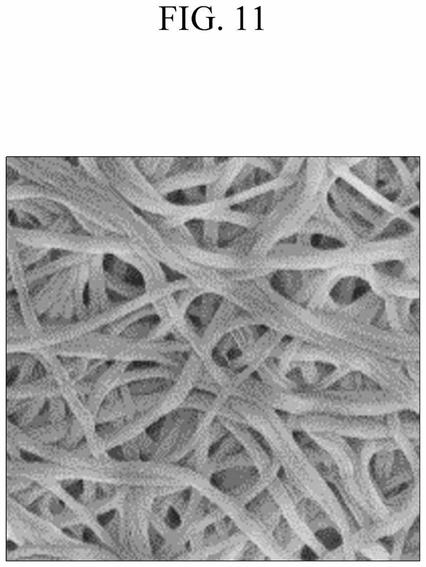

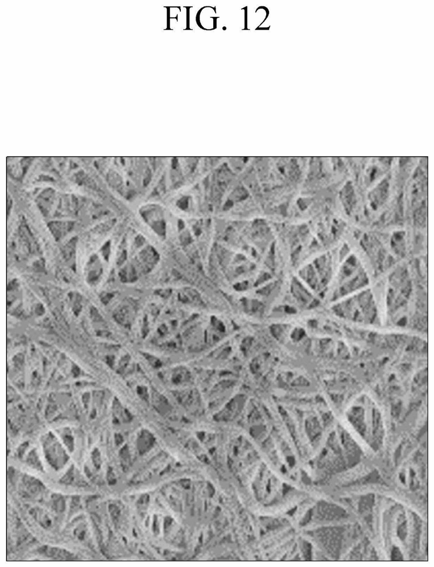

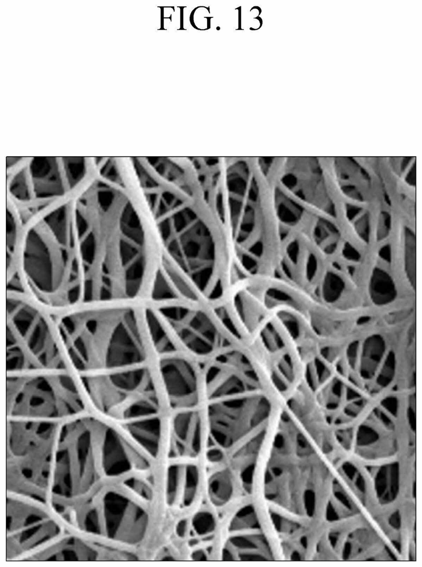

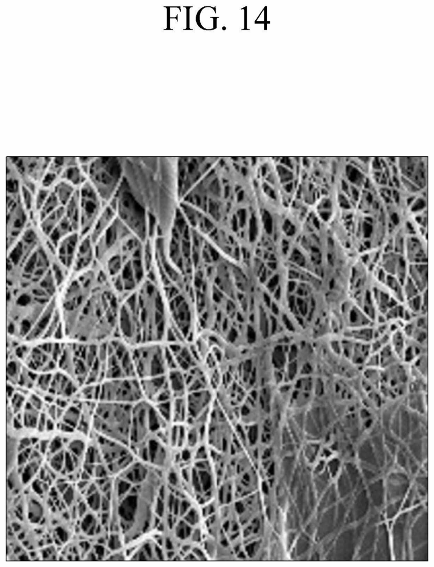

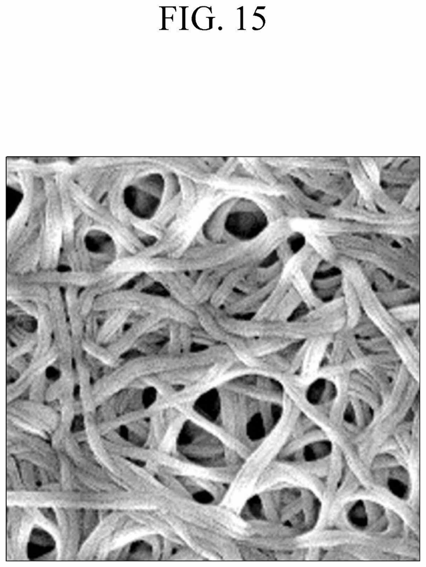

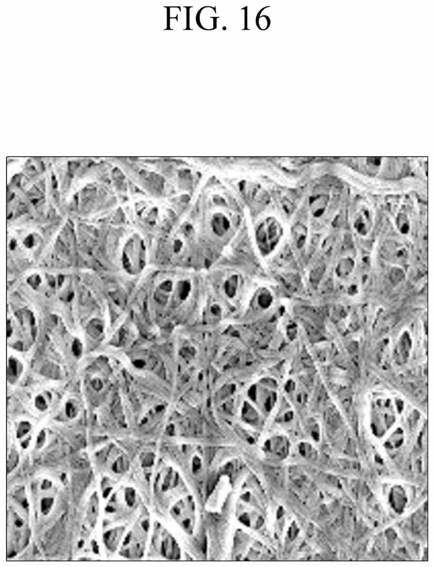

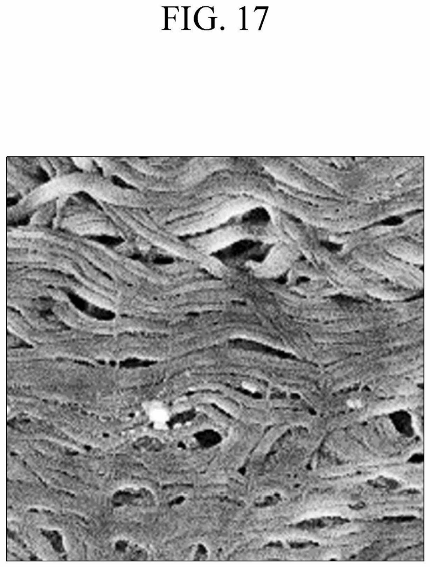

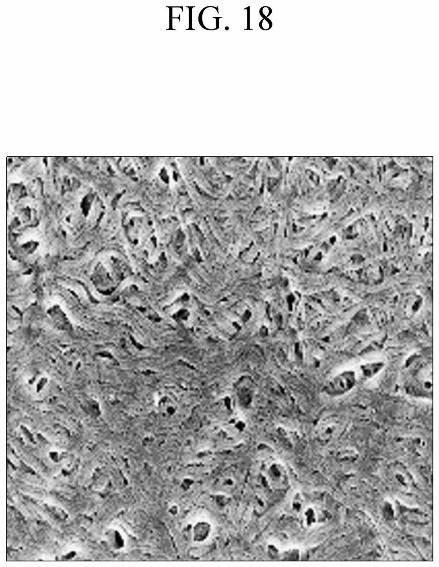

Furthermore, the SEM surface images of the separator of Example 1 at difference magnifications are shown in FIG. 5 (20,000x) and FIG. 6 (10,000x), the SEM surface images of the separator of Example 2 at difference magnifications are shown in FIG. 7 (20,000x) and FIG. 8 (10,000x), the SEM surface images of the separator of Example 3 at difference magnifications are shown in FIG. 9 (20,000x) and FIG. 10 (10,000x), the SEM surface images of the separator of Example 4 at difference magnifications are shown in FIG. 11 (20,000x) and FIG. 12 (10,000x), ), the SEM surface images of the separator of Comparative Example 1 at difference magnifications are shown in FIG. 13 (20,000x) and FIG. 14 (10,000x), the SEM surface images of the separator of Comparative Example 2 at difference magnifications are shown in FIG. 15 (20,000x) and FIG. 16 (10,000x), and the SEM surface images of the separator of Comparative Example 3 at difference magnifications are shown in FIG. 17 (20,000x) and FIG. 18 (10,000x).

**Table 2:**

| | A | B | C | Properties of separator | | | | | |
|---|---|---|---|---|---|---|---|---|---|
| | | | | Thickness (µm) | Density (g/c m³) | Air permeability (s/100 cc) | Standard deviation of air permeability (s/100 cc) | MD tensile strength (kgf/cm²) | MD elongation (%) |
| Example 1 | 5 | 90 | 18 | 8.1 | 0.80 | 53 | 2.45 | 1303 | 9 |
| Example 2 | 10 | 130 | 13 | 8.0 | 0.81 | 57 | 2.83 | 1107 | 6 |
| Example 3 | 15 | 150 | 10 | 7.6 | 0.81 | 80 | 2.95 | 1153 | 6 |
| Example 4 | 20 | 170 | 8.5 | 8.3 | 0.82 | 88 | 3.93 | 1005 | 5 |
| Comparative Example 1 | 0 | 50 | - | 7.9 | 0.77 | 25 | 2.16 | 1639 | 11 |
| Comparative Example 2 | 25 | 190 | 7.6 | 8.4 | 0.82 | 401 | 10.21 | 865 | 4 |
| Comparative Example 3 | 30 | 190 | 6.33 | 7.8 | 0.83 | 5650 | 50.50 | 565 | 4 |

| | | | | | | | | | |
|---|---|---|---|---|---|---|---|---|---|
| A: PVdF amount (wt%) based on 100 wt% of the separator B: Average diameter of nanofibers (nm) C (=B/A): Average diameter of nanofibers (nm)/PVdF amount (wt%) for 100 wt% of the separator | | | | | | | | | |

Referring to Table 2 above, the separators of Examples 1 to 4 were confirmed to exhibit an air permeability ranging from 50 s/100 cc to 100 s/100 cc and standard deviation of the air permeability in a range of 2.0 s/100 cc to 5.0 s/100 cc, which satisfied each desired or optimal range, but the separator of Comparative Example 1, which included no PVdF and thus had an extremely large pore size, exhibits a smaller air permeability than the 50 s/100 cc.

In addition, Comparative Examples 2 and 3, which included PVdF in an excessive or substantial amount and thus had an extremely or substantially small and ununiform pore size, were confirmed to exhibit extremely or substantially larger air permeability and standard deviation than Examples 1 to 3, and in addition, substantially deteriorated tensile strength and elongation, compared to Examples 1 to 3.

Referring to FIG. 5 to FIG. 12, the separators of Examples 1 to 4 were confirmed to form pores with a uniform, or substantially uniform, size.

On the other hand, referring to Table 2 and FIGS. 13 and 14, the separator of Comparative Example 1 including no PVdF was confirmed to form pores with an extremely or substantially large size and thus exhibit extremely or substantially small air permeability.

In addition, referring to Table 2 above and FIGS. 15 to 18, the separators according to Comparative Examples 2 and 3 including an excessive or substantial amount of PVdF were confirmed to form pores with an extremely or substantially small and nonuniform size and thus exhibit extremely or substantially large air permeability.

### Evaluation Example 2: Evaluation of Separator Properties According to Manufacturing Method

The separators of Example 1 and Comparative Examples 6 to 8 were measured with respect to thickness / density / air permeability and deviation of the air permeability / MD tensile strength and elongation in the same manner as described in Evaluation Example 1, and the results are shown in Table 3 below.

In addition, the separators of Examples 1 and 5 and Comparative Examples 4 and 5 were measured with respect to thickness / density / MD tensile strength and elongation in the same manner as in Evaluation Example 1, and the results are shown in Table 4 below.

**Table 3:**

| | Properties of separator | | | | | |
|---|---|---|---|---|---|---|
| | Thickness (µm) | Density (g/cm³) | Air permeability (s/100 cc) | Standard deviation of air permeability (s/100 cc) | MD tensile strength (kgf/cm²) | MD elongation (%) |
| Example 1 | 8.1 | 0.80 | 53 | 2.45 | 1303 | 9 |
| Comparative Example 6 | 9.1 | 0.73 | 33 | 3.88 | 613 | 5 |
| Comparative Example 7 | 9.6 | 0.71 | 25 | 3.50 | 510 | 4 |
| Comparative Example 8 | 16.5 | 0.40 | 24 | 3.41 | 328 | 2 |

Referring to Table 3 above, the separators of Comparative Examples 6 to 8, which were manufactured at a heat press temperature of 200 °C or less in the heat pressing step, were confirmed to exhibit low air permeability and all deteriorated strength and elongation, compared to that of Example 1.

**Table 4:**

| | Properties of separator | | | |
|---|---|---|---|---|
| | Thickness (µm) | Density (g/cm³) | MD tensile strength (kgf/cm²) | MD elongation (%) |
| Example 1 | 8.1 | 0.80 | 1303 | 9 |
| Example 5 | 8.9 | 0.77 | 925 | 7 |
| Comparative Example 4 | 8.2 | 0.76 | 427 | 3 |
| Comparative Example 5 | 7.7 | 0.79 | 550 | 4 |

Referring to Table 4 above, Examples 1 and 5 exhibited desired or improved tensile strength and elongation, and in particular, Example 1, in which the heat press pressure was set at 4.4 kgf/cm², exhibited the most desired or improved tensile strength and elongation.

In addition, the separators of Comparative Examples 4 and 5, in which the imidization temperature was set at less than 350 °C, were confirmed to exhibit much deteriorated tensile strength and elongation, compared to those of Examples 1 and 5.

### Evaluation Example 3: Evaluation of Cell Thermal Exposure Characteristics

The separators of Examples 1 to 5 and Comparative Examples 1 to 8 were respectively used to manufacture rechargeable lithium battery cells.

A positive electrode active material slurry was prepared by mixing 96 wt% of LiCoO₂, 2 wt% of Ketjen black, and 2 wt% of polyvinylidene fluoride in an N-methyl pyrrolidone solvent. The positive electrode active material slurry was coated on an Al current collector, and then dried and compressed to manufacture a positive electrode.

A negative electrode active material slurry was prepared by mixing 97.5 wt% of artificial graphite, 1.0 wt% of carboxylmethyl cellulose, and 1.5 wt% of styrene butadiene rubber (SBR) in a water solvent. The negative electrode active material slurry was coated on a copper current collector, and then dried and compressed to manufacture a negative electrode.

Between the manufactured positive and negative electrodes, each of the separators of Examples 1 to 5 and Comparative Examples 1 to 8 was disposed, and then an electrolyte solution prepared by dissolving LiPF₆ in a mixed solvent of ethylene carbonate and ethylmethyl carbonate (in a volume ratio of 50:50) was injected thereinto, manufacturing the rechargeable lithium battery cells.

The manufactured rechargeable lithium battery cells were full-charged to SOC 100, and then subjected to thermal exposure evaluation.

The manufactured rechargeable lithium battery cells were placed in a chamber and observed with respect to changes while maintained at each temperature of 134 °C, 137 °C, 140 °C, and 143 °C after increasing to the temperatures from room temperature (25 °C) at a rate of 7 °C/min.

If (when) no thermal runaway occurs while maintaining each of the temperatures, 'OK' is given, but if (when) rapid thermal runaway occurs when exposed to the high temperatures, 'NG' is given, as shown in Table 5.

**Table 5:**

| | Thickness of separator | Cell heat exposure test temperature (°C) | | | |
|---|---|---|---|---|---|
| | | 134 °C | 137 °C | 140 °C | 143 °C |
| Example 1 | 8.1 *µ*m | OK | OK | NG | NG |
| Example 2 | 8.0 *µ*m | OK | OK | NG | NG |
| Example 3 | 7.6 *µ*m | OK | OK | NG | NG |
| Example 4 | 8.3 *µ*m | OK | OK | NG | NG |
| Example 5 | 8.9 *µ*m | OK | OK | NG | NG |
| Comparative Example 1 | 7.9 *µ*m | NG | NG | NG | NG |
| Comparative Example 2 | 8.4 *µ*m | NG | NG | NG | NG |
| Comparative Example 3 | 7.8 *µ*m | NG | NG | NG | NG |
| Comparative Example 4 | 8.2 *µ*m | NG | NG | NG | NG |
| Comparative Example 5 | 7.7 *µ*m | NG | NG | NG | NG |
| Comparative Example 6 | 9.1 *µ*m | NG | NG | NG | NG |
| Comparative Example 7 | 9.6 *µ*m | NG | NG | NG | NG |
| Comparative Example 8 | 16.5 *µ*m | NG | NG | NG | NG |

Referring to Table 5 above, Examples 1 to 5 were such that when exposed to the temperature of 137 °C, the thermal runaway did not occur while maintaining the temperature even, but Comparative Examples 1 to 8 were such that when exposed to the temperature of 134 °C, the thermal runaway occurred.

While this disclosure has been described in connection with what is presently considered to be practical example embodiments, it is to be understood that the disclosure is not limited to the disclosed embodiments. On the contrary, the disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A separator, comprising:
nanofibers including a polyimide and a fluorine-based polymer, the nanofibers forming a plurality of pores;
wherein the fluorine-based polymer is included in an amount in a range of 1 wt% to 20 wt% based on 100 wt% of the separator, and
the separator has an air permeability in a range of 50 s/100 cc to 100 s/100 cc.

2. The separator as claimed in claim 1, wherein the separator is an electrospun separator.

3. The separator as claimed in claim 1 or claim 2, wherein:
the fluorine-based polymer comprises at least one of a polyvinylidene fluoride (PVdF) homopolymer, a polyvinyl fluoride (PVF) homopolymer, a copolymer of vinylidene fluoride or vinyl fluoride with other monomer, and a combination thereof, and
wherein the other monomer comprises at least one of chlorotrifluoroethylene, trifluoroethylene, hexafluoropropylene, ethylene tetrafluoride, alkylene (C1 to C10 alkylene) monomer, and a combination thereof.

4. The separator as claimed in any one of claims 1 to 3, wherein a melting point of the fluorine-based polymer is in a range of 100 °C to 200 °C.

5. The separator as claimed in any one of claims 1 to 4, wherein
(a) the polyimide and the fluorine-based polymer are included in a weight ratio in a range of 99:1 to 80:20,
and/or
(b) an average diameter of the nanofibers is in a range of 50 nm to 200 nm,
and/or
(c) an average diameter of the pore is in a range of 50 nm to 2,500 nm,
and/or
(d) a value (nm/wt%) obtained by dividing an average diameter (nm) of the nanofibers by an amount (wt%) of the fluorine-based polymer based on 100 wt% of the separator is in a range of 8 to 20,
and/or
(e) a thickness of the separator is in a range of 1 µm to 15 µm,
and/or
(f) a standard deviation of air permeability of the separator is in a range of 2.0 s/100cc to 5.0 s/100cc.

6. The separator as claimed in any one of claims 1 to 5, wherein a tensile strength of the separator in an MD direction is in a range of 1000 kgf/cm² to 2000 kgf/cm².

7. The separator as claimed in any one of claims 1 to 6, wherein an elongation of the separator in an MD direction is in a range of 5% to 15%.

8. A method for manufacturing a separator for a rechargeable lithium battery, the method comprising:
preparing an electrospinning solution including polyamic acid, a fluorine-based polymer, and a solvent;
electrospinning the electrospinning solution onto a release film to form a coating layer;
drying the coating layer at a temperature in a range of 150 °C to 250 °C;
subjecting the dried coating layer to heat-pressing at a temperature in a range of 200 °C to 300 °C;
subjecting the heat-pressed coating layer to thermal imidization at a temperature greater than 300 °C and less than 450 °C to form a separator; and
removing the release film from the separator.

9. The method as claimed in claim 8, wherein based on a sum of 100 wt% of the amount of the polyamic acid and the amount of the fluorinated polymer, the fluorine-based polymer is included in an amount in a range of 1 wt% to 20 wt%.

10. The method as claimed in claim 8 or claim 9, wherein the polyamic acid and the fluorinated polymer is included in a weight ratio in a range of 99:1 to 80:20.

11. The method as claimed in any one of claims 8 to 10, wherein the drying is performed in a vacuum for a duration in a range of 30 minutes to 1 hour.

12. The method as claimed in any one of claims 8 to 11, wherein the heat-pressing is performed at a temperature in a range of 220 °C to 280 °C.

13. The method as claimed in any one of claims 8 to 12, wherein the heat-pressing is performed at a pressure in a range of 3.0 kgf/cm² to 5.0 kgf/cm².

14. The method as claimed in any one of claims 1 to 13, wherein the thermal imidization is performed at a temperature in a range of 350 °C to 450 °C.

15. A rechargeable lithium battery, comprising:
a positive electrode;
a negative electrode; and
the separator as claimed in any one of claims 1 to 7 between the positive electrode and the negative electrode.
